# EUROPEAN PATENT SPECIFICATION

(11) **EP 3 753 999 B1**
(45) Date of publication and mention of the grant of the patent: **03.11.2021**
(21) Application number: 19181129.8
(22) Date of filing: 19.06.2019
(51) Int. Cl.: C10L 9/08, C10G 1/00, B01J 19/24, B01J 3/00, B01J 3/04, B01J 19/00, B01J 19/18, C02F 1/00, C02F 11/18

(54) **SEMI-CONTINOUS HYDROTHERMAL REACTION SYSTEM**
SYSTEM ZUR HALBKONTINUIERLICHEN HYDROTHERMALEN REAKTION
SYSTÈME DE RÉACTION HYDROTHERMIQUE SEMI-CONTINU

(43) Date of publication of application: 23.12.2020
(73) Proprietor: The Hong Kong Research Institute of Textiles and Apparel Limited, Kowloon, Hong Kong (HK)
(72) Inventor: KEH, Edwin Yee Man, Kowloon (HK); YAO, Lei, Hong Kong (HK); LIU, Yang, Kowloon (HK); CHAN, Alex Hok Chung, Hong Kong (HK); LEUNG, John Kin Ming, Kowloon (HK); CHEN, Collin Xin, Kowloon (HK); CHAN, Jason Lap Hung, Hong Kong (HK); CHAN, Philip Yun Ngok, Kowloon (HK); KAJIWARA, Kanji, Kowloon (HK); SUZUOKA, Akihiro, Kowloon (HK)
(74) Representative: Otten, Roth, Dobler & Partner mbB Patentanwälte

(56) References cited:
- WO-A1-2011/104261
- US-A1- 2014 364 676
- JAN STEMANN ET AL: "Assessment of the Energetic Efficiency of A Continuously Operating Plant for Hydrothermal Carbonisation of Biomass", PROCEEDINGS OF THE 48TH SCANDINAVIAN CONFERENCE ON SIMULATION AND MODELING (SIMS 2007), vol. 57, 3 November 2011 (2011-11-03), pages 125-132, XP055650162, Sweden (Goteborg) ISSN: 1650-3686, DOI: 10.3384/ecp11057125 ISBN: 978-91-7685-817-2
- KAMBO HARPREET SINGH ET AL: "Process Water from the Hydrothermal Carbonization of Biomass: A Waste or a Valuable Product?", WASTE AND BIOMASS VALORIZATION, SPRINGER NETHERLANDS, NL, vol. 9, no. 7, 30 March 2017 (2017-03-30), pages 1181-1189, XP036522716, ISSN: 1877-2641, DOI: 10.1007/S12649-017-9914-0 [retrieved on 2017-03-30]

## Description

### TECHNICAL FIELD

The present disclosure generally relates to a hydrothermal reaction system. In particular, the present disclosure relates to such hydrothermal system capable of achieving high efficiencies in both substance utilization and energy consumption.

### BACKGROUND

Recently, environmental issues have received much attention in textile and clothing industries. Physical reuse and chemical recycling of clothing and fabrics have been researched. Attention has been drawn to chemical decomposition and recycling of garments, fabrics, fibers and the like by means of subcritical water.

However, most of the garments, fabrics, etc. are bulky solids that can be difficult to convert into a slurry, which is required for optimal treatment efficiency. Besides, these bulky solids are difficult to feed into the reactor in large quantities, decomposed at a stable rate, and extracted from the reactor in large quantities. An efficient subcritical water treatment plant for treating solid matters has been lacking in general.

A batch-wise subcritical water treatment reactor that is commonly used is required to feed raw solid materials, reaction additives and reaction water on the top, and to extract reaction product materials at the bottom. Therefore, the reaction water used has to be discharged and discarded for each batch.

As the reaction liquid is required to be discharged every time in a batch-type reactor, it is necessary to heat a new amount of reaction water every time, and to install a chilling device to cool down the hot reaction solution to be discharged, resulting in unnecessary energy consumption, extra running cost, as well as complicating the reactor design and leading to a huge size of equipment. Such drawbacks are major hindrances for the batch-type reactor to achieve competitiveness.

Regardless of whether the reactor is a batch-type one or a continuous-type one, solid materials and reaction products may undesirably attach to the reaction vessel after reaction. Agglutination is formed on the inner surface of the reaction vessel, which may interfere with subsequent reaction(s). Therefore, it is necessary to discharge the retained solids from the reactor during the course of reaction. Not only does it interrupt the reaction process, but also requires even more complicated equipment design and an increased construction cost. The temperature, pressure, reaction additive concentration, and residence time in the reaction vessel are fluctuated, thus inevitably affecting the reaction rate and the resultant product quality.

In the art, it is known how to treat organic matter under subcritical water conditions. A review of using subcritical (and supercritical) water for treating organic matters is given by Lachos-Perez, D., Brown, A.B., Mudhoo, A., Martinez, J., Timko, M.T., Rostagno, M.A., and Forster-Carneiro, T., "Subcritical and supercritical water extraction, hydrolysis, gasification and carbonization of biomass: a critical review," Biofuel Research Journal 14 (2017) 611-626, DOI: 10.18331/BRJ2017.4.2.6. Japanese Patent No. 4334857 and Japanese Unexamined Patent Application Publication No. 2001-137006 have disclosed that solid materials with high calorific values can be obtained by subcritical water reaction treatment using wood-based biomass as raw materials. In addition to the wood-based biomass, Japanese Patent No. 3963124 has disclosed a method of using substances obtained by subcritical reaction treatment of organic waste composed of raw sewage, sewage sludge, garbage and the like contaminated by contaminants such as plastics as compost, fuel, etc. Also, by the reaction of biomass with subcritical water or supercritical water, the product obtained is a solid substance showing a high calorific value not less than that of a fossil resource, an oily substance and a high-performance water-soluble substance that enables growth of organisms. It is described in Japanese Unexamined Patent Publication No. 2013-14737 that hydrolysis can be carried out at a lower temperature by adding an acidic, alkaline, or salt catalyst.

A continuous reaction processing apparatus using subcritical water or supercritical water is described in Japanese Unexamined Patent Publications No. 2001-347300, 2004-298692 and 2008-296192 and the like. In all cases, the solid matter is limited to materials that can form a slurry with a particle shape of 1 mm or less, which substantially limits the application of the apparatus.

It is also known in the art how to treat fibers under subcritical-water conditions. However, most of the total waste discharge of fibrous products is not recycled, and most of the waste discharge is incinerated. In particular, for cellulose such as cotton fibers, which account for about half of the whole textile/garment products containing a plurality of fibers like polyester (PET), most of waste discharge is incinerated due to difficulty in separating cotton fibers and PET fibers. In addition, it takes a lot of energy to incinerate mixed fibers, and it discharges carbon dioxide, a greenhouse gas. Therefore, there is a problem of high environmental burden, as reported in "The recycling technique of disposable clothing and the outline of development of high value added products," (translation), authored by Ministry of Economy, Trade and Industry, Manufacturing Industry Bureau Textile Division, Asahi Kasei Fibers Corporation, published 19 November 2009.

In order to solve the aforementioned problem of high environmental burden, separation of the cotton fibers from the mixed fibers by a treatment method using subcritical water has been attempted. However, similar to the incineration approach, there is a problem that the environmental load is high, because it requires a lot of energy as reported in Japanese Patent Application No. 2000-255554.

Most of the clothing that has been put to practical use is composed of mixed fibers. In separating these mixed fibers, there are only a few methods having high energy efficiency and economic viability. As one method for separating these mixed fibers, a technique of decomposing and recovering fibers by subcritical-water reaction treatment in the presence of an organic acid as a catalyst has been reported in Japanese Patent Application No. 2017-156921. Jan Steman et al (Assessment of the Energetic Efficiency of A Continuously Operating Plant for Hydrothermal Carbonisation of Biomass, 2011) discloses a Hydrothermal Carbonization plant comprising a preheater, a lock hopper, a hydrothermal reactor and a piston press. Solid biomass is preheated at atmospheric pressure and further heated in the lock hopper by mixing with recycled process water. It is concerned with lowering the external energy consumption through the recycle of hot compressed process water.

Nonetheless, there is a need in the art for a subcritical water treatment system that can process bulky solid raw materials with one or more advantages such as improved energy efficiency, reduced equipment cost, reduced demand in space, discharge of the retained solids from the reactor without affecting the reaction rate and resultant product quality, etc. Since a subcritical water reactor is one type of hydrothermal reactor, the approach used in developing the subcritical water treatment system is applicable to developing a hydrothermal reaction system.

### SUMMARY

The present disclosure provides a hydrothermal reaction system for processing batches of raw materials in a semi-continuous manner. The system comprises a plurality of hydrothermal reactors, a filtering subsystem, a fluid subsystem and a computer control subsystem.

An individual hydrothermal reactor is configured to pressurize and heat a reaction solution to reach a target pressure and a target temperature so as to form a superheated reaction solution. The superheated reaction solution is used for reacting with a batch of raw materials deposited in the individual hydrothermal reactor to yield a plurality of solid reaction products.

The filtering subsystem comprises one or more filters for separating the plurality of solid reaction products from the superheated reaction solution. Thereby, the superheated reaction solution is recovered.

The fluid subsystem comprises one or more pipes, one or more valves and one or more pumps for carrying a liquid to and from the filtering subsystem and to and from the individual hydrothermal reactor. The liquid is the superheated reaction solution or a mixture of the superheated reaction solution and the plurality of solid reaction products.

The computer control subsystem comprises one or more computers for controlling the plurality of hydrothermal reactors and the fluid subsystem. The one or more computers are arranged and programmed to configure the fluid subsystem to transfer the recovered superheated reaction solution previously used for reacting with a first batch of raw materials deposited in a first hydrothermal reactor to a second hydrothermal reactor different from the first hydrothermal reactor for recycling the superheated reaction solution in reacting with a second batch of raw materials. The first and second hydrothermal reactors are selected from the plurality of hydrothermal reactors. The one or more computers are further arranged and programmed to configure the second hydrothermal reactor to receive the second batch of raw materials under atmospheric pressure before the superheated reaction solution used in reacting with the first batch of raw materials is recovered by the filtering subsystem. Thereby, the disclosed system processes different batches of raw materials in a semi-continuous manner.

In one non-limiting option, the individual hydrothermal reactor is a subcritical water reactor configured to pressurize and heat the reaction solution comprising water to form the superheated reaction solution comprising subcritical water. In certain embodiments, the plurality of hydrothermal reactors consists of two subcritical water reactors.

In another non-limiting option, the individual hydrothermal reactor is a supercritical water reactor such that the superheated reaction solution formed from the reaction solution that comprises water includes supercritical water. In certain embodiments, the plurality of hydrothermal reactors consists of two supercritical water reactors.

The one or more computers may be further arranged and programmed to configure the second hydrothermal reactor to receive reaction additives under atmospheric pressure before the superheated reaction solution used in reacting with the first batch of raw materials is recovered by the filtering system.

The one or more computers may also be further arranged and programmed to configure the one or more valves and the one or more pumps to set up a circuit in a network formed by the one or more pipes. The circuit is used for circulating the mixture between the filtering subsystem and the individual hydrothermal reactor so as to collect the plurality of solid reaction products at the filtering subsystem.

Preferably, the individual hydrothermal reactor comprises a stirrer for stirring the superheated reaction solution in the individual hydrothermal reactor. The stirrer may be a paddle blade or a turbine blade. In certain embodiments, the stirrer is a blade having a lateral span and a longitudinal length satisfying the following requirements. First, the lateral span occupies at least one third of a cross-sectional diameter of an internal cavity of the individual hydrothermal reactor for reducing adhesion of any solid reaction product on a surface of the internal cavity. Second, the longitudinal length that is selected causes the blade to extend beyond a highest liquid surface allowed for the individual hydrothermal reactor.

In certain embodiments, the individual hydrothermal reactor is configured to heat the reaction solution to reach the target temperature that is in a range of 105°C and 370°C. In certain embodiments, the individual hydrothermal reactor is configured to heat the reaction solution to reach the target temperature selected over at least a range of 105°C and 150°C.

In certain embodiments, the individual hydrothermal reactor is further configured to blow superheated steam or saturated steam into an internal cavity of the individual hydrothermal reactor for heating the reaction solution.

In certain embodiments, the individual hydrothermal reactor comprises a coil located at a periphery of the individual hydrothermal reactor. The coil is configured to carry a heating medium for heating the reaction solution. The heating medium may be superheated steam or saturated steam.

In certain embodiments, the individual hydrothermal reactor comprises a jacket located at a periphery of the individual hydrothermal reactor. The jacket is configured to intake a heating medium for heating the reaction solution. The heating medium may be superheated steam or saturated steam.

Other aspects of the present disclosure are disclosed as illustrated by the embodiments hereinafter.

### BRIEF DESCRIPTION OF THE DRAWINGS

FIG. 1 depicts a hydrothermal reaction system in accordance with an exemplary embodiment of the present disclosure.
FIG. 2 depicts a cross-sectional view of a hydrothermal reaction system to show a stirring blade therein in accordance of one embodiment of the present disclosure.
FIG. 3 depicts a first realization of the disclosed hydrothermal reaction in accordance with one embodiment of the present disclosure.
FIG. 4 depicts a second realization of the disclosed hydrothermal reaction in accordance with one embodiment of the present disclosure.
FIG. 5 depicts a third realization of the disclosed hydrothermal reaction in accordance with one embodiment of the present disclosure.
FIG. 6 depicts a fourth realization of the disclosed hydrothermal reaction in accordance with one embodiment of the present disclosure.

### DETAILED DESCRIPTION

A hydrothermal reactor is a reaction vessel configured to heat and pressurize a reaction solution that contains aqueous solutions and mixtures thereof to a certain temperature and a certain pressure so as to allow a reaction, e.g., hydrolysis, to carry out with one or more reactants deposited in the reaction vessel. The hydrothermal reactor may be specifically configured for setting the pressure and temperature to form subcritical water in the reaction solution so as to conduct the reaction in the presence of subcritical water. This special configuration of the hydrothermal reactor is referred to as a subcritical water reactor. As used throughout the specification and appended claims, the subcritical water reactor is understood to be one type of hydrothermal reactor. Similarly, a supercritical water reactor is configured to form supercritical water in the reaction solution for carrying out reaction, and is understood to be another type of hydrothermal reactor.

Before details of the hydrothermal reaction system disclosed herein are provided, a description of how the disclosed system operates is given as follows. Raw materials in the form of bulky solids are added to a reaction vessel (i.e. a hydrothermal reactor) of the disclosed system. The raw materials, such as organic waste (biomass), clothing, fibers, fabrics and cloth, are intended for hydrothermal treatment. Reaction additives, such as water and acid(s), are also added to the reaction vessel to form a reaction solution. The addition of the raw materials and the reaction additives is conveniently carried out under atmospheric pressure. The reaction vessel is then heated to keep the temperature and pressure of the reaction solution constant over time. As a result, steady reaction is carried out to decompose the raw materials. By transferring the reaction solution directly to a second reaction vessel without cooling so as to reuse the reaction solution for another round of reaction, a high efficiency in substance and energy utilization is achieved. The second reaction vessel has already been deposited with another batch of raw materials and possibly with some reaction additives to compensate for some loss of reaction solution and/or reactants spent in previous reaction. As such, the disclosed system is equipped with two reaction vessels. Reactions are performed alternately in the two reaction vessels. While reaction in one reaction vessel is in progress, another reaction vessel is available for deposition of raw materials and reaction additives under atmospheric pressure. The disclosed system operates in a semi-continuous manner in that it is feasible to initiate processing a new batch of raw materials shortly after one batch of raw materials is completed in processing. By this semi-continuous processing of different batches of raw materials, stable reaction is achievable. Discharging the high-temperature reaction solution is eliminated, and cooling of the reaction solution is not required. As a result, miniaturization of the system and reduction of energy cost are realized. It is also possible that the disclosed system is equipped with more-than-two reaction vessels, though having only two reaction vessels is most advantageous in the sense of minimizing the equipment cost and the space requirement.

An aspect of the present disclosure is to provide a hydrothermal reaction system for processing batches of raw materials in a semi-continuous manner.

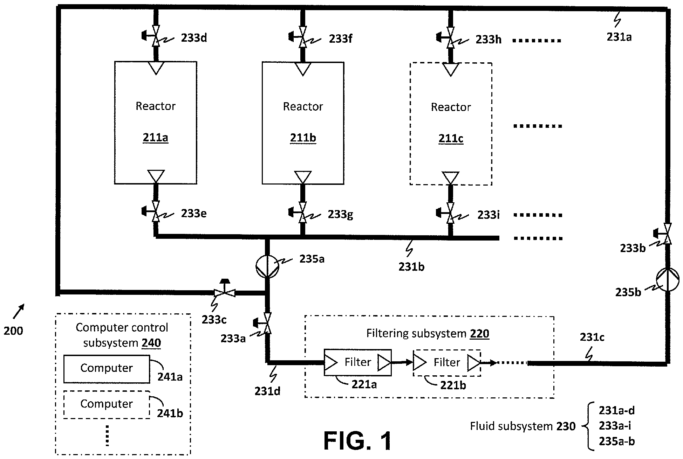

FIG. **1** depicts an exemplary realization of the disclosed system. A system **200** comprises a plurality of hydrothermal reactors **211a-c,** a filtering subsystem **220,** a fluid subsystem **230** and a computer control subsystem **240.**

Although three hydrothermal reactors **211a-c** are depicted in FIG. 1 for illustration, the present invention is not limited to this number of reactors; in the present invention, there are at least two hydrothermal reactors. Nevertheless, it is a preferable choice to have only two hydrothermal reactors in the system **200** due to the advantages mentioned above.

An individual hydrothermal reactor (also referenced as **211a-c)** is configured to pressurize and heat a reaction solution to reach a target pressure and a target temperature for forming a superheated reaction solution. Since a hydrothermal reaction is conducted, the reaction solution comprises water. The superheated reaction solution is used for reacting with a batch of raw materials deposited in the individual hydrothermal reactor **211a-c** to thereby yield a plurality of solid reaction products. For example, if the raw materials are garments made of cotton and PET, and if the reaction solution contains water, the garments are hydrolyzed and decomposed into cotton fibers and PET fibers. These cotton fibers and PET fibers are in fiber form or in powder form. In this example, the plurality of solid reaction products includes the cotton fibers and the PET fibers. In case all the garments are not completely hydrolyzed, the plurality of solid reaction products further includes garment fragments that have not been broken down into fibers.

Preferably, the individual hydrothermal reactor **211a-c** is configured to pressurize the reaction solution by heating the reaction solution while keeping the first reactor as a closed vessel sealed off from the atmosphere. In this configuration of the individual hydrothermal reactor **211a-c**, the pressure inside the closed vessel is the vapor pressure of the water. The target pressure is therefore related to the target temperature, and is the vapor pressure of the water at the target temperature. Nonetheless, pressurization of the reaction solution is not restricted to using the aforementioned method. Pressurization of the reaction solution may also be done by blowing heated steam into the vessel. Excess steam that gives rise to overpressure may be released out of the individual hydrothermal reactor **211a-c** by venting via a pressure control valve, thereby setting the target pressure to be the vapor pressure of the water at the target temperature.

In one embodiment, the individual hydrothermal reactor **211a-c** is a subcritical water reactor. The subcritical water reactor is configured to pressurize and heat the reaction solution comprising water to form the superheated reaction solution comprising subcritical water. Note that the target pressure and target temperature are selected such that subcritical water is formed from water under the selected target pressure and the selected target temperature.

One intended use of the disclosed system is to process raw materials that are bulky solid matters incapable of slurring or dissolution in subcritical water reaction. To treat bulky solid objects, such as garments, one may use the system with reaction additives such as water, acid(s), alkali(s), inorganic compound(s), organic compound(s) and/or catalyst(s). The reaction temperature (viz., the target temperature) may be selected to be between 105°C and 370°C, and the reaction pressure (viz., the target pressure) may be chosen to be between 0.12 MPa and 21 MPa.

A particularly advantageous use of the disclosed system is to process garments, clothes, fabrics, textile materials, etc., as raw materials for subcritical water reaction. In this processing, preferably the reaction solution contains one or more organic acids for speeding up chemical decomposition of the raw materials by hydrolysis. According to one study conducted by the Inventors, the reaction additives and various process parameters are given as follows. An individual organic acid may be selected from citric acid, oxalic acid, tartaric acid, maleic acid and acetic acid. The one or more organic acids can be present at a concentration of between 1-25 % (w/w) in reaction solution. In certain embodiments, the one or more organic acids can be present at a concentration of between 3-20, 3-19, 3-18, 3-17, 3-16, 5-15, 7-15, or 10-15 % (w/w). The target temperature is preferable to be between 100°C and 150°C inclusively. As the target pressure may be determined as the vapor pressure of water at the target temperature, preferably the target pressure is between 0.12 MPa to 0.50 MPa. Correspondingly, the individual hydrothermal reactor **211a-c** is configured to heat the reaction solution to reach the target temperature selected over at least a range of 105°C and 150°C. The target temperature may be set according to the type of fibers intended to be recovered from the raw materials. Advantageously, even when the target temperature is selected to be higher than 100°C, fibers of polyester, polypropylene, lycra and acrylic contained in the raw materials can maintain their fiber shape in the plurality of solid reaction products. With the target temperature set at 110°C or lower, cotton and rayon contained in the raw materials are melted and/or decomposed to fine powders in the plurality of solid reaction products. With the target temperature set at 115°C or higher, cotton, wool, nylon, rayon and cupra contained in the raw materials are melted and/or decomposed to fine powders in the plurality of solid reaction products. With the target temperature set to 125°C or higher, cotton, wool, nylon, silk, rayon, cupra and acetate contained in the raw materials are melted and/or decomposed to fine powders in the plurality of solid reaction products.

In another embodiment, the individual hydrothermal reactor is **211a-c** is a supercritical water reactor. The supercritical water reactor is configured to support working ranges of the target temperature and the target pressure such that the water content into the reaction solution is heated and pressurized to form supercritical water in the superheated reaction solution.

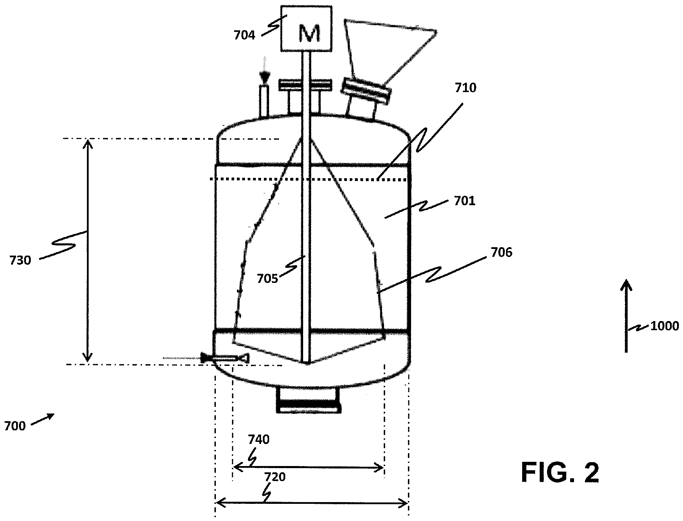

The filtering subsystem **220** comprises one or more filters **221a-b**. The filtering subsystem **220** is used for separating the plurality of solid reaction products from the superheated reaction solution by filtering. Although two filters **221a-b** are shown in FIG. **2** for illustration, the present invention is not limited to this number of filters in realizing the one or more filters **221a-b**. The one or more filters **221a-b** may be implemented as a multistage filter. In one embodiment, the one or more filters **221a-b** may include a serial cascade of a first-stage filter **221a** and a second-stage filter **221b**. The first- and second-stage filters **221a-b** may be configured such that the first-stage filter **221a** filters out larger solid reaction products and the second-stage filter **221b** filters out smaller solid reaction products.

The fluid subsystem **230** is used for carrying a liquid to and from the filtering subsystem **220** and to and from the individual hydrothermal reactor **211a-c**. The liquid is the superheated reaction solution or a mixture of the superheated reaction solution and the plurality of solid reaction products. In particular, the fluid subsystem **230** comprises: one or more pipes **231a-d** connectable to the filtering subsystem **220** and the individual hydrothermal reactor **211a-c** for carrying the liquid; one or more valves **233a-i** for dynamically establishing one or more routes in a network formed by the one or more pipes **231a-d**; and one or more pumps **235a-b** for pumping the liquid through an individual route. Although four pipes **231a-d**, nine valves **233a-i** and two pumps **235a-b** are shown in FIG. **1** for illustration, the present invention is not limited to these numbers in respectively realizing the one or more pipes **231a-d**, the one or more valves **233a-i** and the one or more pumps **235a-b**. An example of a route is a cascade of the pipes **231b** and **231d**. If the valves **233c**, **233g**, **233i** are closed and the valves **233a**, **233e** are open, this example route connects an output of the reactor **211a** and an input of the first-stage filter **221a**. The pump **235a** is used to drive the liquid from the reactor **211a** to the first-stage filer **221a**.

The computer control subsystem **240** is used for determining the one or more routes and also used for controlling the plurality of hydrothermal reactors **211a-c** and the fluid subsystem **230**. The computer control subsystem **240** comprises one or more computers **241a-b**. Although two computers **241a-b** are shown in FIG. **1** for illustration, the present disclosure is not limited to this number in realizing the one or more computers **241a-b**.

To achieve the advantage of reusing the superheated reaction solution, the one or more computers **241a-b** are arranged and programmed to configure the fluid subsystem **230** to transfer the recovered superheated reaction solution previously used for reacting with one a first batch of the raw materials deposited in a first hydrothermal reactor (e.g., the reactor **211a**) to a second hydrothermal reactor (e.g., the reactor **211b**) different from the first hydrothermal reactor for recycling the superheated reaction solution in reacting with a second batch of raw materials. Note that the first and second hydrothermal reactors are selected from the plurality of hydrothermal reactors **211a-c**.

As one example, it is desired to transfer the recovered superheated reaction solution from the first reactor **211a** to the second reactor **211b**, where the recovered superheated reaction solution has been returned back to the first reactor **211a** after filtering by the filtering subsystem **220** is done. The one or more computers **241a-b** determine that the recovered superheated reaction solution passes a route formed by the pipes **231b** and **231a.** The one or more computers **241a-b** configure the valves **233e, 233c** and **233f** to open, the valves **233d, 233g-i, 233a** and **233b** to close, the pump **235a** to switch on, and the pump 235b to switch off.

As another example, it is desired to transfer the recovered superheated reaction solution, obtained immediately after filtering the mixture stored in the first reactor **211a**, directly from an output of the filtering subsystem **220** to the second reactor **211b**. The one or more computers **241a-b** determine to set up a first route formed by the pipes **231b** and **231d** to deliver the mixture from the first reactor **211a** to the filtering subsystem **220**, and a second route formed by the pipes **231c** and **231a** to transport the recovered superheated reaction solution from the filtering subsystem **220** to the second reactor **211b**. The one or more computers **241a-b** configure the valves **233e, 233a, 233b** and **233f** to open, the valves **233c**, **233d** and **233g-i** to close, and the pumps **235a-b** to switch on.

To achieve semi-continuous processing for batches of raw materials, the one or more computers **241a-b** are further arranged and programmed to configure the second hydrothermal reactor to receive the second batch of raw materials under atmospheric pressure before the superheated reaction solution used in reacting with the first batch of raw materials is recovered by the filtering subsystem **220**. As mentioned above, the first and second hydrothermal reactors are different. It follows that while the first batch of raw materials is undergoing reaction in the first hydrothermal reactor, the second batch of raw materials is conveniently deposited into the second hydrothermal reactor under atmospheric pressure. Preferably and advantageously, the one or more computers **241a-b** are further arranged and programmed to configure the second hydrothermal reactor to receive reaction additives under atmospheric pressure before the superheated reaction solution used in reacting with the first batch of raw materials is recovered by the filtering system

As an example, consider that the reactors **211a, 211b** are the first and second hydrothermal reactors. When the reactor **211a** is pressurized and heated to conduct hydrothermal reaction on the first batch of raw materials, the reactor **211b** is deposited with the second batch of raw materials together with depositing the reaction additives therein under atmospheric pressure. After the reaction conducted in the reactor **211a** is completed and the superheated reaction solution is recovered by the filtering subsystem **220**, the superheated reaction solution is transferred to the reactor **211b** such that reaction on the second batch of raw materials can be conducted thereafter.

In one option, the one or more computers **241a-b** are further arranged and programmed to organize the one or more routes as a circuit for circulating the mixture between the filtering subsystem **220** and the individual hydrothermal reactor **211a-c** so as to carry out plural rounds of filtering to more thoroughly filter out the plurality of solid reaction products from the mixture. As an example for illustration, it is desired to set up a (closed-loop) circuit to circulate the mixture between the filtering subsystem **220** and the reactor **211a**. A first route formed by the pipes **231b** and **231d** is used to carry the mixture from an outlet of the reactor **211a** to an input port of the filtering subsystem **220**. A second route formed by the pipes **231c** and **231a** is deployed for returning the mixture after filtering back to the reactor **211a**. The two routes are set up by opening the valves **233e, 233a, 233b, 233d** and closing the valves **233c, 233f-i**. The circuit is formed by the first and second routes. The two pumps **235a-b** are activated to circulate the mixture between the reactor **211a** and the filtering subsystem **220** through the circuit.

In realizing the system **200**, an individual computer (referenced as **241a-b**) in the computer control subsystem **240** may be located close to the plurality of hydrothermal reactors **211a-c** and the filtering subsystem **220** such that the system **200** is compactly formed to reduce the space requirement. Alternatively, the individual computer **241a-b** may be remotely located from the plurality of hydrothermal reactors **211a-c** and the filtering subsystem **220**, and remotely control the same via a communication network, wired or wireless.

Further aspects regarding the individual hydrothermal reactor **211a-c** are disclosed as follows.

Usually, the individual hydrothermal reactor **211a-c** includes one or more addition valves for accepting the reaction additives and the batch of raw materials.

In typical subcritical water reactors, handling of raw materials is restricted, and it usually keeps the solid particle diameter to be not more than 1 mm so that slurry can be formed. In the disclosed system, however, the solid raw materials may be crushed in pretreatment before added to the individual hydrothermal reactor **211a-c** as necessary, or may be added as they are. There is no size restriction for solid raw materials.

The phenomenon of damaging the reaction rate and product quality such as agglutinate in the individual hydrothermal reactor **211a-c** is often caused by local heating and stagnant plaque. In order to eliminate local overheating, it is desirable to reduce the temperature difference between a heating source and an internal cavity of the individual hydrothermal reactor **211a-c** as much as possible.

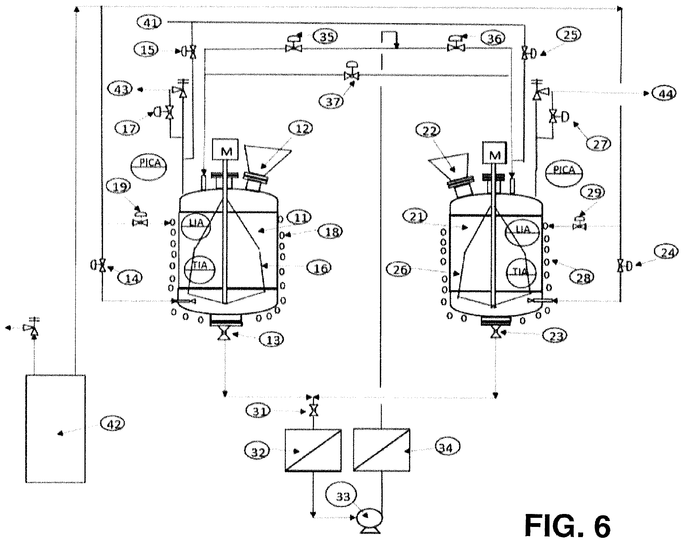

From the above point of view, in order to achieve high energy efficiency for heating reactor, it is desirable to directly blow overheated steam and/or saturated steam produced by a boiler or a steam generator into the individual hydrothermal reactor **211a-c**. Preferably, the individual hydrothermal reactor **211a-c** comprises a heater (e.g., a heating source 42 shown in FIG. **6**), such as the boiler and the steam generator, and is further configured to blow superheated steam or saturated steam into the internal cavity of the individual hydrothermal reactor **211a-c** for heating the reaction solution. The individual hydrothermal reactor **211a-c** usually includes a blowing port through which the superheated steam or saturated steam is blown into the internal cavity. It is also desirable to install a silencer at the blowing port to reduce noise caused by steam blowing and to prevent, or reduce, leakage of heated steam into the atmosphere.

Direct blowing of steam causes condensation of the blowing steam in the individual hydrothermal reactor **211a-c,** and introduces difficulty in maintaining a constant amount of the reaction solution in the internal cavity. To deal with this issue, the individual hydrothermal reactor **211a-c** may further include a sensor for measuring the amount of the reaction solution or a height thereof in the internal cavity. Based on the measured amount or height, the one or more computers **241a-b** may control the volume of the reaction solution by configuring the individual hydrothermal reactor **211a-c** to withdraw a portion of high-temperature reaction solution or to add some reaction additives (which include water) from outside the individual hydrothermal reactor **211a-c.**

In general, when it is necessary to drastically heat the reaction solution from a low temperature to the target temperature, direct injection of steam is carried out. When a steady temperature is reached, drastic heating is not necessary. Heating the reaction solution by a less energy-consuming approach is more desirable. For this purpose, preferably the individual hydrothermal reactor **211a-c** further includes a coil or a jacket for heating the reaction solution. Both the coil and the jacket are located at a periphery of the individual hydrothermal reactor **211a-c.** The coil forms a tube encircling the individual hydrothermal reactor **211a-c**. The jacket wraps the individual hydrothermal reactor **211a-c.** The coil and the jacket are configured to carry a heating medium for heating the reaction solution. Generally, the heating medium is superheated steam or saturated steam.

Furthermore, increasing the stirring effect is also an important issue to maintain a stable reaction rate. Preferably, the individual hydrothermal reactor **211a-c** further includes a stirrer for stirring the superheated reaction solution therein.

There are many common types of the stirrer such as a paddle blade, a turbine blade, a propeller blade, an anchor blade, a ribbon blade, a small-blade-diameter paddle blade, a pitch paddle blade, a double pitch paddle blade, an edged turbine blade, a pitched turbine blade, a disk turbine blade, a radial flow turbine blade, an axial flow turbine blade, a pincushion type blade, etc. Nevertheless, not all blades are optimal in stirring large solids, fibers, clothing and string-like fiber masses in that these solid materials may stick on surfaces of shafts and blades.

In order to avoid, or at least to reduce the possibility of, adhesion and retention on the surfaces of shafts and blades, the stirrer is preferred to be a large blade in comparison with the internal cavity of the individual hydrothermal reactor **211a-c**. One embodiment of such large blade is illustrated in FIG. **2**, which depicts a cross-sectional view of a hydrothermal reactor **700** with a blade **706**. Since the hydrothermal reactor **700** stands upright during operation, a vertical direction **1000** is first defined. Herein in the specification and appended claims, positional modifiers, such as "upper," "lower," "higher," "uppermost," "lowest," etc., are interpreted with reference to the vertical direction **1000**. It is also used herein that "longitudinal" is a modifier indicating a direction parallel to the vertical direction **1000**, and that "lateral" is another modifier indicating a direction perpendicular to the vertical direction **1000**. The hydrothermal reactor **700** has an internal cavity **701**. The internal cavity **701** is designed to have a highest liquid surface **710** allowed for depositing a reaction solution in the hydrothermal reactor **700**. The hydrothermal reactor **700** includes the blade **706** functioned as a stirrer for stirring the reaction solution and raw materials therein. The blade **706** is mounted to a shaft **705**. The shaft **705** is rotatable and is driven by a motor **704** such that the blade **706** is driven to stir the reaction solution and the raw materials. The blade **706** has a lateral span **740** (viz., a horizontal span) and a longitudinal length **730** (viz., a vertical height). The internal cavity **701** has a cross-sectional diameter **720**. The lateral span **740** is selected to be at least one third of the cross-sectional diameter **720** for reducing adhesion of any solid reaction product on a surface of the internal cavity **701**. The longitudinal length **730** is selected to cause the blade **706** to extend beyond, i.e. to rise above, the highest liquid surface **710**.

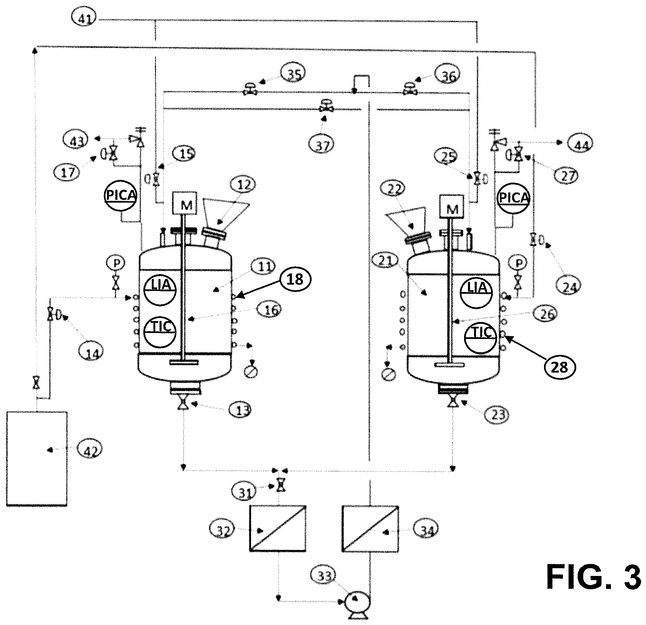

Examples of practical implementation of the disclosed system are shown in FIGS. **3-6**. Each of the systems shown in FIGS. **3-6** is a two-reactor subcritical-water reaction system. The following numerals are used in FIGS. **3-6** and explanations of these numerals are provided.
- 11, 21: Subcritical water reactor.
- 12, 22: Upper inlet.
- 13, 23: Lower outlet.
- 14, 19, 24, 29: Heating valve.
- **18, 28:** Coil / Jacket.
- **15, 17, 25, 27, 31, 35, 36, 37:** Valve.
- **16, 26:** Stirring blade.
- **32, 34:** Filtration equipment.
- **33:** Transfer pump.
- **41:** Water supply line.
- **42:** Heat source equipment.
- **43, 44**: Vent line.

Explanation of practical implementation aspects of the disclosed system is made with reference to the system depicted in FIG. **6**.

The lower extraction port **13** of the subcritical water reaction vessel **11** is closed and various kinds of raw materials and reaction additives are charged from the upper charging inlet **12** in various forms such as liquid state, solid state, semi-solid state, gel state, etc. Water for the reaction is also added from the water supply line **41** via valve **15**. The reaction vessel is stirred uniformly by the stirring blade **16**. Thereafter, steam is blown directly from the heat source **42** via the valve **14**, whereby the subcritical reaction vessel **11** is heated.

When heating is started in the subcritical water reaction vessel **11**, the raw materials are charged into the subcritical reaction vessel **21** where the next reaction is carried out. Various kinds of materials and reaction additives are charged in various forms, such as liquid state, solid state, semi-solid state, gel state, etc., from the upper inlet port **22** while the lower outlet **23** of the reaction vessel **21** is closed.

With the equalizing valve **37** open, the high-temperature high-pressure reaction solution, which has completed the hydrolysis reaction in the subcritical reaction vessel **11** after a predetermined time duration has passed, flows through the valve **13** and the valve **31** to the filtration equipment **32**. Self-circulation of the mixture of the superheated reaction solution and the solid reaction products is performed via the liquid transfer pump **33**, the filtration facility **34** and the valve **35**. The reaction products are separated and recovered in the filtration facilities **32** and **34** without leaving them in the reaction vessel. When the self-circulation is completed, the valve **35** is closed and the valve **36** is opened. The high-temperature high-pressure reaction solution is transferred to the next subcritical reaction vessel **21** in which the valve **23** is closed. The reaction is then started in the reaction vessel **21**. When the temperature difference between the target temperature and the actual temperature of the reaction solution is large, the reaction solution is additionally heated by steam through opening the heating valve **24**. When the temperature difference is small, the reaction solution is additionally heated by opening the heating valve **29**. The substance produced by the reaction is separated and recovered at the filtration facilities **32** and **34** and then taken out of the reaction system.

In the subcritical water reactor **21**, when the heating is started, the lower outlet **13** of the subcritical water reactor **11** is closed, and from the upper inlet **12** various liquids, solids, semisolids, ingredients and reactive additives are charged in any kind the form.

A hydrolysis reaction in the presence of the high-temperature high-pressure reaction solution is conducted at the target temperature. After a predetermined time duration elapses, the reaction in the subcritical reaction vessel **21** ends. The equalizing valve **37** is then opened. The superheated reaction solution passes through the valve **23**, the valve **31**, the filtration facility **32** and the liquid transfer pump 33. The reaction solution is then self-circulated via the filtration facility **34** and the valve **36**. When the self-circulation is completed, the valve **36** is closed and the valve **35** is opened, whereby the reaction solution is transferred to the next reaction vessel, which is the subcritical water reactor **11**. The substances produced by the reaction, i.e., the reaction products, are separated and recovered at the filtration facilities **32** and **34**. When the high-temperature high-pressure reaction solution is transferred to the subcritical reaction vessel **11**, the valve **13** is closed. The reaction is then started, and the reaction solution is additionally heated by a heating valve **14** when necessary.

By alternately transferring the reaction solution between the two subcritical water reactors in the aforementioned manner, it is possible to transfer the high-temperature high-pressure reaction solution directly to the next vessel without discharging or cooling the reaction solution, as well as to achieve a high energy efficiency. Thus, it realizes miniaturization of equipment and reduction of operating cost.

On the body side of the subcritical water reaction vessel **11**, a heating medium (e.g., saturated steam) is supplied by the heating source **42** (a boiler or a steam generator) via the heating medium supply valve **14**. Inside the subcritical water reactor **11**, a large paddle blade **16** is installed, and a baffle is installed to improve the stirring efficiency. Besides, a pressure control system, a temperature control system, and a level control system are installed in the subcritical water reactor. The reaction of raw materials to be treated is monitored by a thermometer, a level meter, and a pressure gauge. The reaction time is also set. The subcritical water reactor **21** is substantially similar to the subcritical water reactor **11** in configuration.

In each of the subcritical water reaction vessels **11, 21,** an automatic vent valve is provided together with a safety valve, but normally none of them operates unless there is special abnormality in the reaction vessel. When the internal cavity of the reactor vessel exceeds the preset pressure (i.e. the target pressure), the automatic vent valve operates to restore the preset pressure. There is a relationship between the operation control pressure of the reactor system, the safety valve discharge pressure, and the automatic vent valve operation pressure: the operation system control pressure of the reactor system should be smaller than the operation pressure of the automatic vent valve, which is also smaller than the pressure of the safety valve discharge pressure. Therefore, a slight sudden disturbance does not induce false triggering of the safety valve.

When the reaction is needed to be paused, pause the corresponding subcritical water reactor while the reaction solution is kept in the reactor. The reactor is allowed to cool naturally. Thus, a special cooling device is not required.

The internal cavity of each reactor is maintained at the working conditions (temperature, pressure, residence time) for obtaining the solid reaction products. Although there is no limitation on the working temperature, the working pressure and the residence time, practically the working temperature is between 110°C and 300°C, the working pressure is between 0.12 to 8.7 MPa, and the residence time is in the range of 15 to 120 minutes.

The differences among the systems of FIGS. **3-6** are in the subcritical water reaction vessels **11, 21**.

In the system of FIG. 6, the reaction vessels **11, 21** are equipped with respective coils **18, 28** for heating the reaction solution therein. Each of respective stirring blades **16, 26** in the reaction vessels **11, 21** is a large blade resembling the blade **706** as described above for FIG. **2**.

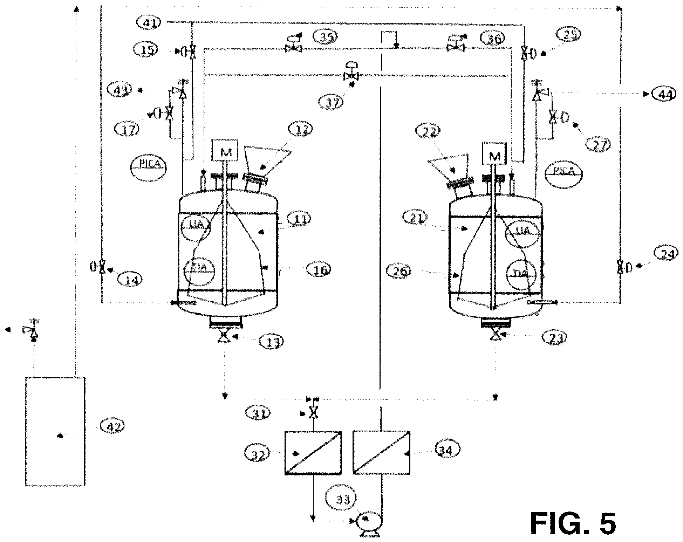

The system of FIG. **5** is different from that of FIG. **6** in that the reaction vessels **11, 21** in the system of FIG. **5** are not equipped with any coil or jacket.

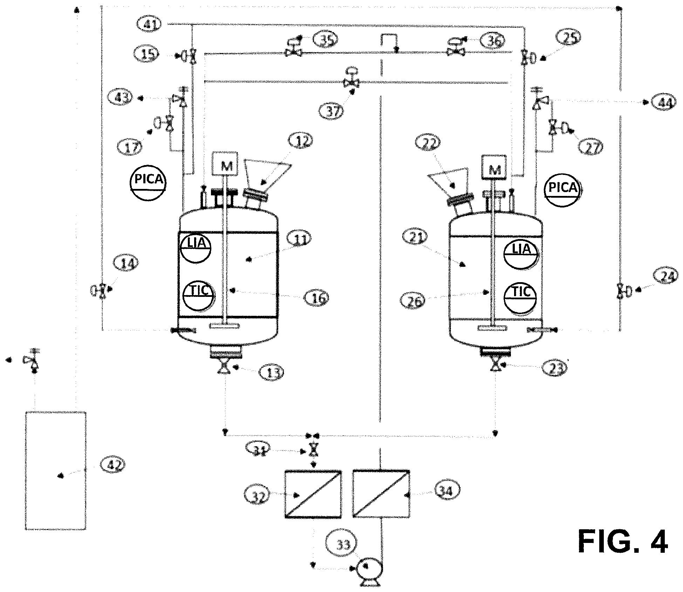

In the system of FIG. **4**, a small blade smaller than the blade **760** is used in each of the reaction vessels **11, 21**. Furthermore, no coil or jacket is installed in each of the reaction vessels **11, 21**.

Similar to the system of FIG. **4**, the system of FIG. **3** employs the small blade in in each of the reaction vessels **11, 21**. Same as the system of FIG. **6**, the reaction vessels **11, 21** in the system of FIG. **3** are equipped with respective coils **18, 28** for heating the reaction solution therein.

The present invention may be embodied in other specific forms without departing from the essential characteristics thereof. The present embodiment is therefore to be considered in all respects as illustrative and not restrictive. The scope of the invention is indicated by the appended claims rather than by the foregoing description, and all changes that come within the meaning and range of equivalency of the claims are therefore intended to be embraced therein.

### INDUSTRIAL APPLICABILITY

The disclosed semi-continuous hydrothermal reaction system can be used for processing organic wastes, clothes, fabrics, etc., composed of large solid matters that are difficult to be disposed of as target raw materials for subcritical water reaction treatment. Most of the clothing is in a state of blended fibers. In separating these blended fibers, there have been few methods that are able to achieve a high energy efficiency and an economic viability. With the disclosed system, these blended-fiber materials can be processed with heat treatment. It is possible to recycle old clothing by decomposing the old clothing to fibers and by separating the fiber raw materials from the reaction solution. It is possible to construct a plant with a small space, simple and at a low facility cost, as well as to obtain a product that can be operated at a low running cost.

## Claims

1. A hydrothermal reaction system comprising:
a plurality of hydrothermal reactors, wherein an individual hydrothermal reactor is configured to pressurize and heat a reaction solution to reach a target pressure and a target temperature so as to form a superheated reaction solution, the superheated reaction solution being used for reacting with a batch of raw materials deposited in the individual hydrothermal reactor to yield a plurality of solid reaction products;
a filtering subsystem comprising one or more filters for separating the plurality of solid reaction products from the superheated reaction solution, whereby the superheated reaction solution is recovered;
a fluid subsystem comprising one or more pipes, one or more valves and one or more pumps for carrying a liquid to and from the filtering subsystem and to and from the individual hydrothermal reactor, the liquid being the superheated reaction solution or a mixture of the superheated reaction solution and the plurality of solid reaction products;
a computer control subsystem comprising one or more computers for controlling the plurality of hydrothermal reactors and the fluid subsystem, the one or more computers being arranged and programmed:
to configure the fluid subsystem to transfer the recovered superheated reaction solution previously used for reacting with a first batch of raw materials deposited in a first hydrothermal reactor to a second hydrothermal reactor different from the first hydrothermal reactor for recycling the superheated reaction solution in reacting with a second batch of raw materials, wherein the first and second hydrothermal reactors are selected from the plurality of hydrothermal reactors; and
to configure the second hydrothermal reactor to receive the second batch of raw materials under atmospheric pressure before the superheated reaction solution used in reacting with the first batch of raw materials is recovered by the filtering subsystem.

2. The system of claim 1, wherein the individual hydrothermal reactor is a subcritical water reactor configured to pressurize and heat the reaction solution comprising water to form the superheated reaction solution comprising subcritical water.

3. The system of claim 2, wherein the plurality of hydrothermal reactors consists of two subcritical water reactors.

4. The system of any of claims 1-3, wherein the one or more computers are further arranged and programmed to configure the second hydrothermal reactor to receive reaction additives under atmospheric pressure before the superheated reaction solution used in reacting with the first batch of raw materials is recovered by the filtering system.

5. The system of any of claims 1-3, wherein the one or more computers are further arranged and programmed to configure the one or more valves and the one or more pumps to set up a circuit in a network formed by the one or more pipes for circulating the mixture between the filtering subsystem and the individual hydrothermal reactor so as to collect the plurality of solid reaction products at the filtering subsystem.

6. The system of any of claims 1-3, wherein the individual hydrothermal reactor comprises a stirrer for stirring the superheated reaction solution in the individual hydrothermal reactor.

7. The system of claim 6, wherein the stirrer is a paddle blade or a turbine blade.

8. The system of claim 6, wherein the stirrer is a blade having a lateral span and a longitudinal length such that:
the lateral span is at least one third of a cross-sectional diameter of an internal cavity of the individual hydrothermal reactor for reducing adhesion of any solid reaction product on a surface of the internal cavity; and
the longitudinal length that is selected causes the blade to extend beyond a highest liquid surface allowed for the individual hydrothermal reactor.

9. The system of any of claims 1-3, wherein the individual hydrothermal reactor is configured to heat the reaction solution to reach the target temperature that is within a range of 105°C to 370°C.

10. The system of any of claims 1-3, wherein the individual hydrothermal reactor is configured to heat the reaction solution to reach the target temperature selected over at least a range of 105°C and 150°C.

11. The system of any of claims 1-3, wherein the individual hydrothermal reactor is further configured to blow superheated steam or saturated steam into an internal cavity of the individual hydrothermal reactor for heating the reaction solution.

12. The system of any of claim 1-3, wherein the individual hydrothermal reactor comprises a coil located at a periphery of the individual hydrothermal reactor, the coil being configured to carry a heating medium for heating the reaction solution.

13. The system of claim 12, wherein the heating medium is superheated steam or saturated steam.

14. The system of any of claims 1-3, wherein the individual hydrothermal reactor comprises a jacket located at a periphery of the individual hydrothermal reactor, the jacket being configured to intake a heating medium for heating the reaction solution.

15. The system of claim 14, wherein the heating medium is superheated steam or saturated steam.

## Patentansprüche

1. System zur hydrothermalen Reaktion, umfassend:
eine Vielzahl von hydrothermalen Reaktoren, wobei ein einzelner hydrothermaler Reaktor so konfiguriert ist, dass er eine Reaktionslösung unter Druck setzt und erhitzt, um einen Zieldruck und eine Zieltemperatur zu erreichen, um eine überhitzte Reaktionslösung zu bilden, wobei die überhitzte Reaktionslösung zur Reaktion mit einer Charge von Rohmaterialien verwendet wird, die in dem einzelnen hydrothermalen Reaktor platziert werden, um eine Vielzahl von festen Reaktionsprodukten zu erhalten;
ein Filter-Subsystem, umfassend einen oder mehrere Filter zum Abtrennen der Vielzahl von festen Reaktionsprodukten aus der überhitzten Reaktionslösung, wodurch die überhitzte Reaktionslösung zurückgewonnen wird;
ein Fluid-Subsystem, umfassend ein oder mehrere Rohre, ein oder mehrere Ventile und eine oder mehrere Pumpen zur Beförderung einer Flüssigkeit zu und von dem Filter-Subsystem und zu und von dem einzelnen hydrothermalen Reaktor, wobei die Flüssigkeit die überhitzte Reaktionslösung oder ein Gemisch aus der überhitzten Reaktionslösung und der Vielzahl von festen Reaktionsprodukten ist;
ein Computersteuerungs-Subsystem, umfassend einen oder mehrere Computer zum Steuern der Vielzahl von hydrothermalen Reaktoren und des Fluid-Subsystems, wobei der eine oder die mehreren Computer angeordnet und programmiert sind, um:
das Fluid-Subsystem so zu konfigurieren, dass die zurückgewonnene überhitzte Reaktionslösung, die zuvor für die Reaktion mit einer ersten Charge von Rohmaterialien verwendet wurde, die in einem ersten hydrothermalen Reaktor platziert wurden, in einen zweiten hydrothermalen Reaktor überführt wird, der sich von dem ersten hydrothermalen Reaktor unterscheidet, um die überhitzte Reaktionslösung bei der Reaktion mit einer zweiten Charge von Rohmaterialien wiederzuverwenden, wobei der erste und der zweite hydrothermale Reaktor aus der Vielzahl von hydrothermalen Reaktoren ausgewählt sind; und
den zweiten hydrothermalen Reaktor so zu konfigurieren, dass er die zweite Charge von Rohmaterialien unter atmosphärischem Druck aufnimmt, bevor die überhitzte Reaktionslösung, die bei der Reaktion mit der ersten Charge von Rohmaterialien verwendet wurde, durch das Filter-Subsystem zurückgewonnen wird.

2. System nach Anspruch 1, wobei der einzelne hydrothermale Reaktor ein unterkritischer Wasserreaktor ist, der konfiguriert ist, um die Reaktionslösung, die Wasser umfasst, unter Druck zu setzen und zu erhitzen, um die überhitzte Reaktionslösung, die unterkritisches Wasser umfasst, zu bilden.

3. System nach Anspruch 2, wobei die Vielzahl der hydrothermalen Reaktoren aus zwei unterkritischen Wasserreaktoren besteht.

4. System nach einem der Ansprüche 1 bis 3, wobei der eine oder die mehreren Computer ferner so angeordnet und programmiert sind, dass sie den zweiten hydrothermalen Reaktor so konfigurieren, dass er Reaktionsadditive unter atmosphärischem Druck aufnimmt, bevor die überhitzte Reaktionslösung, die bei der Reaktion mit der ersten Charge von Rohmaterialien verwendet wurde, durch das Filtersystem zurückgewonnen wird.

5. System nach einem der Ansprüche 1 bis 3, wobei der eine oder die mehreren Computer ferner so angeordnet und programmiert sind, dass sie das eine oder die mehreren Ventile und die eine oder die mehreren Pumpen so konfigurieren, dass sie einen Kreislauf in einem durch das eine oder die mehreren Rohre gebildeten Netzwerk aufbauen, um das Gemisch zwischen dem Filter-Subsystem und dem einzelnen hydrothermalen Reaktor zirkulieren zu lassen, um die Vielzahl der festen Reaktionsprodukte am Filter-Subsystem zu sammeln.

6. System nach einem der Ansprüche 1 bis 3, wobei der einzelne hydrothermale Reaktor einen Rührer zum Rühren der überhitzten Reaktionslösung in dem einzelnen hydrothermalen Reaktor umfasst.

7. System nach Anspruch 6, wobei der Rührer ein Schaufelblatt oder eine Turbinenschaufel ist.

8. System nach Anspruch 6, wobei der Rührer ein Blatt mit einer seitlichen Spannweite und einer Länge in Längsrichtung ist, so dass:
die seitliche Spannweite mindestens ein Drittel des Querschnittsdurchmessers eines inneren Hohlraums des einzelnen hydrothermalen Reaktors beträgt, um die Adhäsion jedes festen Reaktionsprodukts an einer Oberfläche des inneren Hohlraums zu reduzieren; und
die gewählte Länge in Längsrichtung bewirkt, dass sich das Blatt über die höchste für den einzelnen hydrothermalen Reaktor zulässige Flüssigkeitsoberfläche hinaus erstreckt.

9. System nach einem der Ansprüche 1 bis 3, wobei der einzelne hydrothermale Reaktor konfiguriert ist, um die Reaktionslösung zu erhitzen, um die Zieltemperatur zu erreichen, die in einem Bereich von 105 °C bis 370 °C liegt.

10. System nach einem der Ansprüche 1 bis 3, wobei der einzelne hydrothermale Reaktor konfiguriert ist, um die Reaktionslösung zu erhitzen, um die Zieltemperatur zu erreichen, die über mindestens einen Bereich von 105 °C und 150 °C ausgewählt wurde.

11. System nach einem der Ansprüche 1 bis 3, wobei der einzelne hydrothermale Reaktor ferner konfiguriert ist, um überhitzten Dampf oder gesättigten Dampf in einen inneren Hohlraum des einzelnen hydrothermalen Reaktors zum Erhitzen der Reaktionslösung zu blasen.

12. System nach einem der Ansprüche 1 bis 3, wobei der einzelne hydrothermale Reaktor eine Wendel umfasst, die sich an einem Umfang des einzelnen hydrothermalen Reaktors befindet, wobei die Wendel so konfiguriert ist, dass sie ein Heizmedium zum Erhitzen der Reaktionslösung führt.

13. System nach Anspruch 12, wobei das Heizmedium überhitzter Dampf oder gesättigter Dampf ist.

14. System nach einem der Ansprüche 1 bis 3, wobei der einzelne hydrothermale Reaktor einen Mantel umfasst, der sich an einem Umfang des einzelnen hydrothermalen Reaktors befindet, wobei der Mantel konfiguriert ist, um ein Heizmedium zum Erhitzen der Reaktionslösung aufzunehmen.

15. System nach Anspruch 14, wobei das Heizmedium überhitzter Dampf oder gesättigter Dampf ist.

## Revendications

1. Système de réaction hydrothermique comprenant :
une pluralité de réacteurs hydrothermiques, un réacteur hydrothermique individuel étant configuré pour pressuriser et pour chauffer une solution réactionnelle jusqu'à atteindre une pression cible et une température cible de manière à former une solution réactionnelle surchauffée, la solution réactionnelle surchauffée étant utilisée pour réagir avec un lot de matières premières déposées dans le réacteur hydrothermique individuel pour donner une pluralité de produits solides de réaction ;
un sous-système de filtration comprenant un ou plusieurs filtres permettant de séparer la pluralité de produits solides de réaction de la solution réactionnelle surchauffée, moyennant quoi la solution réactionnelle surchauffée est récupérée ;
un sous-système fluidique comprenant une ou plusieurs conduites, une ou plusieurs soupapes et une ou plusieurs pompes permettant d'acheminer un liquide jusqu'au sous-système de filtration et à partir de celui-ci et jusqu'au réacteur hydrothermique individuel et à partir de celui-ci, le liquide étant la solution réactionnelle surchauffée ou un mélange de la solution réactionnelle surchauffée et de la pluralité de produits solides de réaction ;
un sous-système de commande informatique comprenant un ou plusieurs ordinateurs permettant de commander la pluralité de réacteurs hydrothermiques et le sous-système fluidique, le ou les ordinateurs étant agencés et programmés :
pour configurer le sous-système fluidique afin de transférer la solution réactionnelle surchauffée récupérée précédemment utilisée pour réagir avec un premier lot de matières premières déposées dans un premier réacteur hydrothermique jusqu'à un second réacteur hydrothermique différent du premier réacteur hydrothermique pour recycler la solution réactionnelle surchauffée par réaction avec un second lot de matières premières, les premier et second réacteurs hydrothermiques étant choisis parmi la pluralité de réacteurs hydrothermiques ; et
pour configurer le second réacteur hydrothermique afin de recevoir le second lot de matières premières sous pression atmosphérique avant que la solution réactionnelle surchauffée utilisée pour réagir avec le premier lot de matières premières ne soit récupérée par le sous-système de filtration.

2. Système selon la revendication 1, dans lequel le réacteur hydrothermique individuel est un réacteur à eau sous-critique configuré pour pressuriser et pour chauffer la solution réactionnelle contenant de l'eau pour former la solution réactionnelle surchauffée contenant de l'eau sous-critique.

3. Système selon la revendication 2, dans lequel la pluralité de réacteurs hydrothermiques consiste en deux réacteurs à eau sous-critique.

4. Système selon l'une quelconque des revendications 1 à 3, dans lequel le ou les ordinateurs sont en outre agencés et programmés pour configurer le second réacteur hydrothermique afin de recevoir des additifs de réaction sous pression atmosphérique avant que la solution réactionnelle surchauffée utilisée pour réagir avec le premier lot de matières premières ne soit récupéré par le système de filtration.

5. Système selon l'une quelconque des revendications 1 à 3, dans lequel le ou les ordinateurs sont en outre agencés et programmés pour configurer la ou les soupapes et la ou les pompes afin d'établir un circuit dans un réseau formé par la ou les canalisations pour faire circuler le mélange entre le sous-système de filtration et le réacteur hydrothermique individuel, de manière à collecter la pluralité de produits solides de réaction au niveau du sous-système de filtration.

6. Système selon l'une quelconque des revendications 1 à 3, dans lequel le réacteur hydrothermique individuel comprend un agitateur permettant d'agiter la solution réactionnelle surchauffée dans le réacteur hydrothermique individuel.

7. Système selon la revendication 6, dans lequel l'agitateur est un brassoir ou une pale de turbine.

8. Système selon la revendication 6, dans lequel l'agitateur est une pale dont la portée latérale et la longueur longitudinale sont telles que :
la portée latérale vaut au moins un tiers du diamètre de section transversale d'une cavité interne du réacteur hydrothermique individuel, pour réduire l'adhérence de tout produit solide de réaction à une surface de la cavité interne ; et
la longueur longitudinale choisie amène la pale à s'étendre au-delà d'une surface maximale de liquide autorisée pour le réacteur hydrothermique individuel.

9. Système selon l'une quelconque des revendications 1 à 3, dans lequel le réacteur hydrothermique individuel est configuré pour chauffer la solution réactionnelle jusqu'à atteindre la température cible comprise au sein d'une plage allant de 105 °C à 370 °C.

10. Système selon l'une quelconque des revendications 1 à 3, dans lequel le réacteur hydrothermique individuel est configuré pour chauffer la solution réactionnelle jusqu'à atteindre la température cible sélectionnée sur une plage allant de 105 °C à 150 °C au moins.

11. Système selon l'une quelconque des revendications 1 à 3, dans lequel le réacteur hydrothermique individuel est en outre configuré pour souffler de la vapeur surchauffée ou saturée dans une cavité interne du réacteur hydrothermique individuel pour chauffer la solution réactionnelle.

12. Système selon l'une quelconque des revendications 1 à 3, dans lequel le réacteur hydrothermique individuel comprend une spirale, située à une périphérie du réacteur hydrothermique individuel et conçue pour transporter un milieu chauffant pour chauffer la solution réactionnelle.

13. Système selon la revendication 12, dans lequel le milieu chauffant est de la vapeur surchauffée ou saturée.

14. Système selon l'une quelconque des revendications 1 à 3, dans lequel le réacteur hydrothermique individuel comprend, à une périphérie du réacteur hydrothermique individuel, une chemise conçue pour recevoir un milieu chauffant permettant de chauffer la solution réactionnelle.

15. Système selon la revendication 14, dans lequel le milieu chauffant est de la vapeur surchauffée ou saturée.
